# EUROPEAN PATENT SPECIFICATION

(11) **EP 3 510 902 B1**
(45) Date of publication and mention of the grant of the patent: **16.09.2020**
(21) Application number: 18151644.4
(22) Date of filing: 15.01.2018
(51) Int. Cl.: A47J 31/42, A47J 31/44

(54) **COFFEE MACHINE**
KAFFEEMASCHINE
MACHINE À CAFÉ

(43) Date of publication of application: 17.07.2019
(73) Proprietor: BSH Hausgeräte GmbH, 81739 München (DE)
(72) Inventor: Studencnik, Simon, 2390 Ravne na Koroskem (SI); Lemez, Samo, 3327 Smartno ob Paki (SI)

(56) References cited:
- EP-A1- 3 081 124
- WO-A1-2014/185783
- US-A1- 2010 288 135

## Description

The present invention relates to a beverage maker, more particularly, to a coffee machine provided with an entrance opening for receiving coffee beans, also can be provided with an auxiliary entrance permitting feeding of ground coffee, a grinder for grinding coffee beans which have entered the coffee apparatus via the entrance opening, a brewing unit for brewing coffee on the basis of the delivered ground coffee from the grinder or, and an air ventilation system.

From the state of the art a different types of beverage preparation machines e.g. coffee machines, drip or capsule coffee makers etc. are known. These beverage preparation machines allow different drinks such as coffee, espresso, hot chocolate etc. to be prepared. Such drink preparation machines also include what are known as fully automatic coffee machines in which coffee beans and water are kept available and which, at the push of a button, grind the coffee beans in their own grinder, press the coffee powder into a brewing module, add heated water and brew fresh coffee from it. In the process of making coffee mostly the hot water and steam is used, this causes that the moist air stays in the interior of the device what can lead to mold formation. For this reason some devices is provided with a ventilation system provided with ventilation slots, opening etc. Typically ventilation slots are made in an outer housing which surrounds an interior of drink preparation machines for ventilation. This ensures that the moisture can escape from the interior and that heat which is generated in particular by a heating element can likewise escape from the interior so that individual components in the interior are not overheated. This ventilation can take place by thermal convection, during which outer air is sucked into the interior through ventilation slots which are arranged in the lower region or on the baseplate of the drink preparation machine, flows past the components of the drink preparation machine and absorbs moisture and heat in the process, and then escapes to the outer environment through ventilation slots which are arranged in the upper region of the outer housing. This ventilation can however be made to take place by means of fans or ventilators. Conducting moisture away from the interior is very important to forestall mold formation, which is to be prevented in particular on components which are in contact in some way with foods, for example the coffee beans, coffee powder, water and the brewed coffee.

The document WO2014185783A1 discloses a coffee brewing apparatus and a system, comprising an entrance opening for receiving coffee beans, a grinder for grinding coffee beans which have entered the coffee brewing apparatus via the entrance opening, comprising a ground coffee transportation path for transporting ground coffee from the grinder to a brewing unit, a brewing unit for brewing coffee on the basis of the delivered ground coffee, and an air ventilation system in fluid connection with the grinder for providing at least one air stream comprising a coffee grinding aroma to the outside of the coffee brewing apparatus and preferably in the direction of a user of the apparatus. The air ventilation system further comprises at least one fan and at least one air stream guiding element, which is at least partially providing a flow path for the air stream from the grinder to the fan. The invention also relates to a method for preparing a beverage by means of an apparatus as described before. By this air ventilation system, moist and hot air coming from a brewing area and aroma agents enclosed in the coffee beans and released during grinding are transported to the outside so that the coffee grinding aroma is distributed in the outside area.

The document US2010288135A1 describes a drink preparation machine with an outer housing, which contains at least one ventilation element for ventilating an interior which is enclosed by the outer housing. In order to reduce the likelihood of penetration by dust, water and/or small objects, to allow simple and quick cleaning with reduced use of detergents and to achieve energy-saving operation of the drink preparation machine, the at least one ventilation element can be actuated to open and close. An advantage of the present invention consists in that the ventilation element is opened as briefly as possible in order to reduce the likelihood of penetration by dust, water or objects, to provide flat and continuous surfaces which can be cleaned quickly and easily and to prevent excessive removal of heat, as a result of which energy is saved.

Presented solutions does not provide efficient and reliable means to prevent a drip tray cavity from condensation of water vapour. During the brewing process a great volume of steam and moisture is created in a drip tray cavity. The drip tray cavity is usually a closed space where because of a large temperature difference between moist air and surrounding walls, condensation process can easily happen. It is the object of the present invention to overcome problems associated with condensation process inside the coffee machines as described above to protect its internal components from the detrimental effect caused by the vapour and humidity existence and provide reliable and robust solution.

The foregoing general description and detailed description, given hereafter, are merely exemplary and are understood as additional explanations of the claimed invention. Other advantages and features of the invention result from the following descriptions, drawings and claims.

Mentioned object is solved by a coffee machine air guide channel whereby the air guide channel is used to create communication between the ventilation system and the drip tray cavity.

In accordance with the present invention, there is provided a coffee machine having, inter alia, a body, a housing, a water tank, a pump, a brewing unit for brewing coffee on basis of delivered ground coffee, a drip tray, a drip tray cavity and a ventilation system for providing air stream at least for transporting a coffee grinding aroma and an air guide channel to connect the drip tray cavity with the ventilation system for the purpose of removing moisture from the drip tray cavity and for improving temperature distribution inside the drip tray cavity. Because of changed temperature distribution to more regular inside the drip tray cavity and moisture removal by using the air guide channel, double effect of decreasing probability of water condensation inside the drip tray cavity has been achieved.

The condensate gathering inside of appliances causes issues with destroying inner structure, and a major risk of mold gathering. Analysing why this condensate is gathered, comes to conclusion that the temperature differences between waste water with 40°C entering the drip tray, and between an ambient temperature of approximately 21°C under harsh conditions with huge relative moisture this means that the condensation will be present immediately. Using the air guide channel, air movement is provided in this area, therefore balanced relative humidity inside of appliance with respect to ambience of appliance has been achieved to prevent the major humidity take-up, it helps balancing the inner and outer relative humidity. Moist air is transported from the drip tray cavity by the air guide channel to the ventilation system and then is removed outside the coffee machine.

The ventilation system for coffee machine is created for providing air stream coming into contact with the ground coffee beans, directed after this contact to the outside of the coffee machine and system respectively and preferably in the direction of a user. By this air ventilation system aroma agents enclosed in the coffee beans and released during grinding are transported to the outside so that the coffee grinding aroma is distributed in the outside area. This is for increasing user impression of fresh coffee used for brewing the beverages and increases the impression of quality. In detail, the air ventilation system preferably transports an air stream loaded with coffee grinding aroma released during grinding in the grinder or during brewing the grounded coffee beans. Accordingly, mentioned air stream is utilized for transporting moisture from brewing unit surroundings to outside.

The drip tray cavity is an isolated space of the coffee machine, usually closed by the drip tray, where a wasted water during brewing and steam realised by brewing unit is collected in the drip tray. The drip tray is slidingly mounted in the drip tray cavity and has a drawer shape.

In the preferred embodiment of the invention the air guide channel is separated from an inner structure of the coffee machine. For improving efficiency to achieve homogeneous temperature distribution inside the drip tray cavity and moisture, the air guide channel is separated from the inner structure of the coffee machine. In that embodiment it is possible to set up connection namely fluid-tight connection, between the drip tray cavity and the ventilation system to transport moist air and provide fresh air from outside to the drip tray cavity to avoid air loses of the air stream.

Advantageously the air guide channel is created as a one part body. Advantageously by using a rigid or elastic tube. The advantage of such air guide channel is in that the tightness of the air guide channel is ensured. The connection between the air guide channel and the drip tray cavity and the ventilation system can be made by welding or by putting on the flange or other way.

In another preferred embodiment the air guide channel is at least partially integrated with a body of the coffee machine. Therefore during the production process by injection molding of the body, at least a portion of the air guide channel can be created together in that process which positively affects in production costs reducing.

According to the invention, the air guide channel is in the form of an inverted L-shaped pipe having guide channel inlet and guide channel outlet, which directly connects the drip tray cavity with the ventilation system for the purpose of removing moisture from the drip tray cavity and for improving temperature distribution inside the drip tray cavity. The air stream passes the air guide channel in the direction from an air guide channel inlet towards an air guide channel outlet. Because of the shape of the air guide channel, namely an initial portion of the air guide channel is vertically oriented, which is favorable for the air stream. Therefore moist air can be transported from the drip tray cavity by the air guide channel to the ventilation system and then is removed outside the coffee machine more efficiently.

According to the invention, the ventilation system is provided with at least one ventilator. Said ventilator positively affects the efficiency of the air stream surrounding the brewing unit device for more effective transporting moist air and coffee aroma outside the coffee machine.

According to the invention, said ventilator provides also air stream for improving temperature distribution inside the drip tray cavity and for transporting moisture from drip tray cavity via the ventilation system to an outside of coffee machine. The already pre-integrated ventilator, has new, double functionality, namely provides aroma coffee fragrance, and force convection for venting the drip tray cavity trough the air guide channel. This force convection is powerful enough to achieve balanced relative humidity inside of appliance with respect to ambience of appliance. Advantageously, the air guide channel which communicates the drip tray cavity with the ventilation system, used even without forced convection is enough to prevent the major humidity concentration, it helps balancing the inner and outer relative humidity, even when the appliance, said ventilator doesn't work.

The present invention provides a simple and cheap in production the air guide channel built in the inner structure of the coffee machine to communicate the drip tray cavity with the ventilation system. The ventilator usually existed in the ventilation system is used also for generating air stream in the air guide channel. The air guide channel is responsible for reducing the probability of water condensation inside the drip tray cavity by changing temperature distribution to more regular inside the drip tray cavity and moisture removal. Therefore double effect of decreasing probability of water condensation inside the drip tray cavity has been achieved.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
Fig. 1 shows a coffee machine with opened appliance door in isometric view.
Fig. 2 shows a drip tray in isometric view.
Fig. 3 shows the coffee machine with opened appliance door with partially ejected the drip tray in isometric view.
Fig. 4 shows a cross section of the drip tray, the drip tray cavity, a body and a housing of a coffee machine.
Fig. 5 shows the body of the coffee machine in rear view.
Fig. 6 shows the body of the coffee machine in top view.

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

Coffee machine comprises a body, a housing, a water tank, a pump, a brewing unit for brewing coffee on basis of delivered ground coffee, a drip tray, a drip tray cavity and a ventilation system for providing air stream at least for transporting a coffee grinding aroma and an air guide channel to connect the drip tray cavity with the ventilation system for the purpose of removing moisture from the drip tray cavity and for improving temperature distribution inside the drip tray cavity. Such the coffee machines also include what are known as fully a fully automatic coffee machines in which coffee beans and water are kept available and which, at the push of a button, grind the coffee beans in their own grinder, press the coffee powder into a brewing module, add heated water and brew fresh coffee from it, then fresh coffee flows out through a beverage outlet placed above the drip tray.

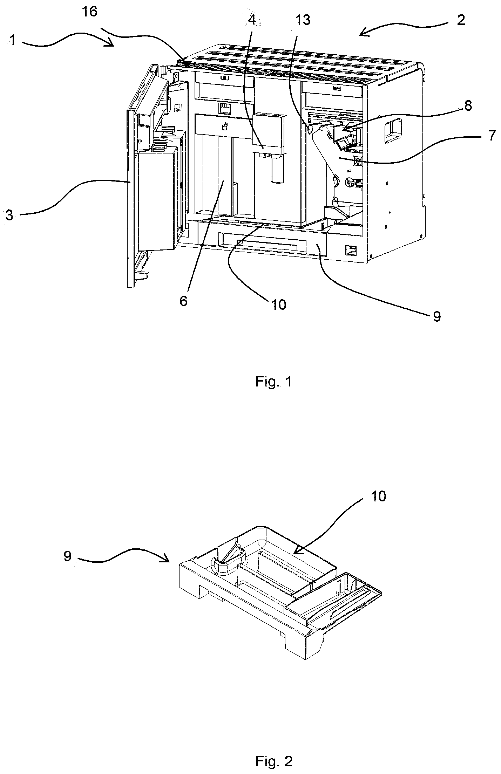

Fig. 1 shows a coffee machine 1 in a front isometric view. Opened an appliance door 3 is attached to a body 16 by hinges (not shown on the figure). From the rear, top, side and bottom side the coffee machine is covered by a housing 2. The body 16 is designed to mount many components like a removable water tank 6 to store fresh water for brewing coffee, a grinding unit device 5 (not shown on this figure), a beverage outlet 4 for dispensing a beverage in a cup, a brewing device 7 for brewing coffee, a ventilation system 8, equipped with a ventilator 12 (not shown on this figure) for providing air stream for transporting a coffee grinding aroma outside the coffee machine 1 and for removing moisture from the drip tray cavity 10, also for improving temperature distribution inside said drip tray cavity 10 by using an air guide channel 11 (not shown on this figure). The air guide channel 11 has on one end an air guide channel inlet 14 (not shown on this figure) which is in the contact with a drip tray cavity 10 and on opposite end an air guide channel outlet 13, which is in the contact with the ventilation system 8. Therefore the air stream generated by the ventilation system 8 can penetrate the drip tray cavity 10, then can remove moist air from this area outside and can improve temperature distribution inside the drip tray cavity 10. Further, the coffee machine 1 comprises a container for coffee beans, a grinder, a heater, a steam relief unit, a milk frothing unit, sensors, valves etc. which are not shown on the figure but existence of which is necessary to carry out the brewing process.

Fig. 2 shows the drip tray 9 in isometric view. The drip tray 9 is in the form of a drawer. The front vertical part of the drip tray 9 closes the drip tray cavity 10 (not shown on this figure) and creates with the body 16 even surface after slipping it to the body 16 (not shown on this figure). The drip tray 9 further comprises a series of recesses to collect inter alia a waste water leaking from the beverage outlet 4 (not shown on this figure) during cleaning the system or steam released from the brewing device 7 (not shown on this picture). The drip tray cavity 10 is practically closed space, what causes that the moist air could stay in the interior of the device what would lead to mold formation, however the air guide channel 9 (not shown on this figure) makes it possible that the moist air could be removed from the drip tray cavity 10 outside.

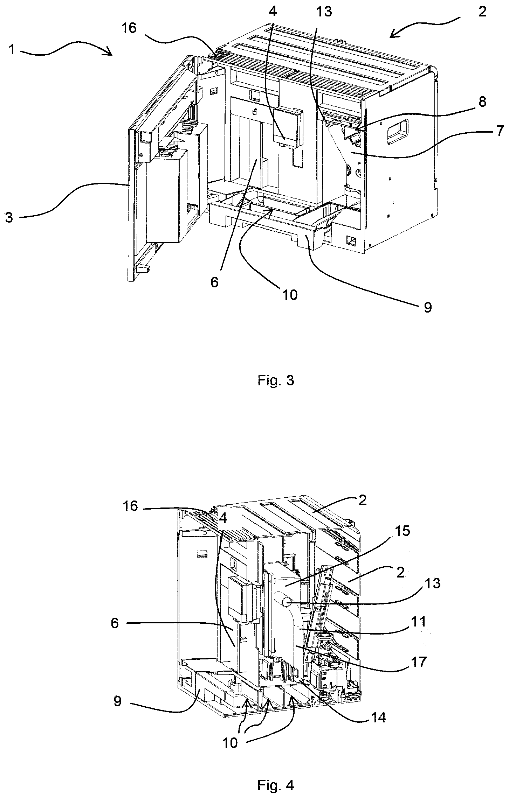

Fig. 3 shows in isometric view the coffee machine with the opened appliance 3 door and with partially ejected the drip tray 9. The drip tray 9 is usually taken out for cleaning it for instance while servicing the coffee machine 1. Opened the appliance door 3 is attached to a body 16 by hinges (not shown on the figure). The drip tray 9 is p From the rear, top, side and bottom side the coffee machine is covered by a housing 2. The body 16 is designed to mount many components like a removable water tank 6 to store fresh water for brewing coffee, a beverage outlet 4 for dispensing a beverage in a cup, the grinding unit device 5 (not shown on this figure), a brewing device 7 for brewing coffee, a ventilation system 8, equipped with a ventilator 12 (not shown on this figure) for providing air stream for transporting a coffee grinding aroma outside the coffee machine 1 and for removing moisture from the drip tray cavity 10, also for improving temperature distribution inside said drip tray cavity 10 by using an air guide channel 11 (not shown on this figure). The air guide channel 11 has on one end an air guide channel inlet 14 (not shown on this figure) which is in the contact with a drip tray cavity 10 and on opposite end an air guide channel outlet 13, which is in the contact with the ventilation system 8. Therefore the air stream generated by the ventilation system 8 can penetrate the drip tray cavity 10, then can remove moist air from this area outside and can improve temperature distribution inside the drip tray cavity 10. Further, the coffee machine 1 comprises a container for coffee beans, a grinder, a heater, a steam relief unit, a milk frothing unit, sensors, valves etc. which are not shown on the figure but existence of which is necessary to carry out the brewing process.

Fig. 4 shows a cross section of the drip tray, the drip tray cavity, a body and a housing of a coffee machine. The drip tray 9 is in the place. Opened the appliance door 3 is attached to a body 16 by hinges (not shown on the figure). From the rear, top, side and bottom side the coffee machine is covered by a housing 2. The body 16 is designed to mount many components like a removable water tank 6 to store fresh water for brewing coffee, a beverage outlet 4 for dispensing a beverage in a cup, the grinding unit device 5 (not shown on this figure), a brewing device 7 for brewing coffee, a ventilation system 8, equipped with a ventilator 12 (not shown on this figure) for providing air stream for transporting a coffee grinding aroma outside the coffee machine 1 and for removing moisture from the drip tray cavity 10, also for improving temperature distribution inside said drip tray cavity 10 by using an air guide channel 11. The air guide channel 11 is in the form of an inverted L-shaped pipe which has on one end an air guide channel inlet 14 which is in the contact with a drip tray cavity 10 and on opposite end an air guide channel outlet 13, which is in the contact with the ventilation system 8. An initial portion 17 of the air guide channel 11 is vertically oriented, what is favorable for the air stream flow. Therefore moist air can be transported from the drip tray cavity by the air guide channel to the ventilation system and then is removed outside the coffee machine more efficiently. Therefore the air stream generated by the ventilation system 8 can penetrate the drip tray cavity 10, then can remove moist air from this area outside and can improve temperature distribution inside the drip tray cavity 10.

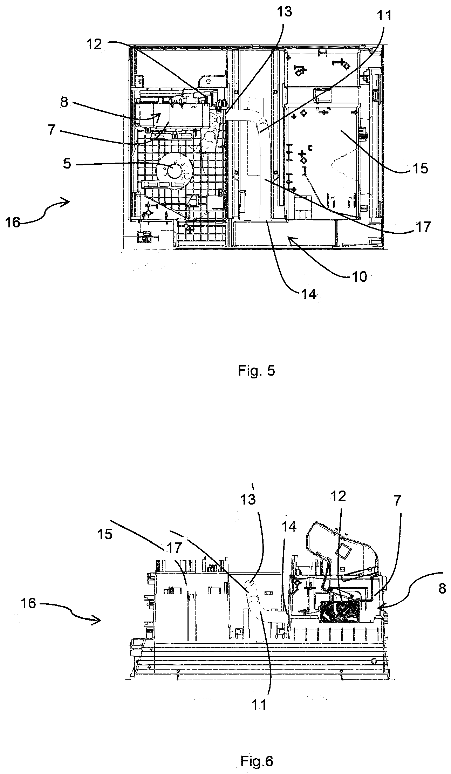

Fig. 5 shows the body of the coffee machine in rear view. The body 16 is designed to mount many components like a removable water tank 6 to store fresh water for brewing coffee, the beverage outlet 4 for dispensing a beverage in a cup, the grinding unit device 5 for grinding coffee beans, the brewing device 7 for brewing coffee, the ventilation system 8, equipped with the ventilator 12 for providing air stream for transporting a coffee grinding aroma outside the coffee machine 1 and for removing moisture from the drip tray cavity 10, also for improving temperature distribution inside said drip tray cavity 10 by using an air guide channel 11. Portion of the body 16 creates a water tank casing 15. The air guide channel 11 is in the form of an inverted L-shaped pipe which has on one end an air guide channel inlet 14 which is in the contact with a drip tray cavity 10 and on opposite end an air guide channel outlet 13, which is in the contact with the ventilation system 8. An initial portion 17 of the air guide channel 11 is vertically oriented, what is favorable for the air stream flow. Therefore the air stream generated by the ventilation system 8 can penetrate the drip tray cavity 10, then can remove moist air from this area outside and can improve temperature distribution inside the drip tray cavity 10. Further, the coffee machine 1 comprises a container for coffee beans, a grinder, a heater, a steam relief unit, a milk frothing unit, sensors, valves etc. which are not shown on the figure but existence of which is necessary to carry out the brewing process.

Fig. 6 shows the body 16 of the coffee machine 1 in top view. The body 16 is designed to mount many components like a removable water tank 6 to store fresh water for brewing coffee, the beverage outlet 4 for dispensing a beverage in a cup, the grinding unit device 5 for grinding coffee beans, the brewing device 7 for brewing coffee, the ventilation system 8, equipped with the ventilator 12 for providing air stream for transporting a coffee grinding aroma outside the coffee machine 1 and for removing moisture from the drip tray cavity 10, also for improving temperature distribution inside said drip tray cavity 10 by using an air guide channel 11. Portion of the body 16 creates a water tank casing 15. The air guide channel 11 is in the form of an inverted L-shaped pipe which has on one end an air guide channel inlet 14 which is in the contact with a drip tray cavity 10 and on opposite end an air guide channel outlet 13, which is in the contact with the ventilation system 8. An initial portion 17 of the air guide channel 11 is vertically oriented, what is favorable for the air stream flow. Therefore the air stream generated by the ventilation system 8 can penetrate the drip tray cavity 10, then can remove moist air from this area outside and can improve temperature distribution inside the drip tray cavity 10. Further, the coffee machine 1 comprises a container for coffee beans, a grinder, a heater, a steam relief unit, a milk frothing unit, sensors, valves etc. which are not shown on the figure but existence of which is necessary to carry out the brewing process.

The present invention provides a simple and cheap the air guide channel build in the coffee machine which is responsible for reducing the steam and moisture volume inside the coffee machine inside the drip tray cavity, additionally because of changed temperature distribution to more regular inside the drip tray cavity and moisture removal by using the air guide channel, double effect of decreasing probability of water condensation inside the drip tray cavity has been achieved.

### List of reference signs

- 1: coffee machine
- 2: housing
- 3: appliance door
- 4: beverage outlet
- 5: grinding unit device
- 6: water tank
- 7: brewing device
- 8: ventilation system
- 9: drip tray
- 10: drip tray cavity
- 11: air guide channel
- 12: ventilator
- 13: air guide channel outlet
- 14: air guide channel inlet
- 15: water tank casing
- 16: body
- 17: initial portion

## Claims

1. A coffee machine (1) having a body (16), a housing (2), a water tank (6), a pump, a brewing device (7) for brewing coffee on basis of delivered ground coffee, a drip tray (9), a drip tray cavity (10) and a ventilation system (8) that is provided with at least one ventilator (12).for providing air stream at least for transporting a coffee grinding aroma outside **characterized in that** the ventilation system (8) is in communication with the drip tray cavity (10) by an air guide channel (11) that is in the form of an inverted L-shaped pipe having air guide channel inlet (13) and air guide channel outlet (14), which directly connects the drip tray cavity (10) with the ventilation system (8) for the purpose of removing moisture from the drip tray cavity (10) and for improving temperature distribution inside the drip tray cavity (10).

2. The coffee machine (1) according to claim 1, **characterized in that** the air guide channel (11) is separated from an inner structure of the coffee machine (1).

3. The coffee machine (1) according to claim 1 or 2, **characterized in that** the air guide channel (11) is created as a one part body.

4. The coffee machine (1) according to any of preceding claims **characterized in that** the air guide channel (11) is at least partially integrated with the body (16) of the coffee machine (1).

5. The coffee machine (1) according to claim 1, **characterized in that** the ventilator (12) providing air stream for improving temperature distribution inside the drip tray cavity (10) and for transporting moisture from drip tray cavity (10) via the ventilation system to an outside of coffee machine.

## Patentansprüche

1. Kaffeemaschine (1) mit einem Hauptteil (16), einem Gehäuse (2), einem Wassertank (6), einer Pumpe, einer Brühvorrichtung (7) zum Brühen von Kaffee auf der Grundlage von zugeführtem gemahlenem Kaffee, einer Tropfschale (9), einer Tropfschalenaussparung (10) und einem Lüftungssystem (8), das mit mindestens einem Ventilator (12) zum Bereitstellen eines Luftstroms zumindest zum Befördern eines Kaffeemahlaromas nach draußen versehen ist, **dadurch gekennzeichnet, dass** das Lüftungssystem (8) über einen Luftleitkanal (11) in Form eines umgekehrt L-förmigen Rohrs, der einen Luftleitkanaleinlass (13) und einen Luftleitkanalauslass (14) aufweist und die Tropfschalenaussparung (10) zwecks Ableitens von Feuchtigkeit aus der Tropfschalenaussparung (10) und zum Verbessern der Temperaturverteilung in der Tropfschalenaussparung (10) direkt mit dem Lüftungssystem (8) verbindet, mit der Tropfschalenaussparung (10) verbunden ist.

2. Kaffeemaschine (1) nach Anspruch 1, **dadurch gekennzeichnet, dass** der Luftleitkanal (11) von einer Innenkonstruktion der Kaffeemaschine (1) getrennt ist.

3. Kaffeemaschine (1) nach Anspruch 1 oder 2, **dadurch gekennzeichnet, dass** der Luftleitkanal (11) als einteiliger Körper gestaltet ist.

4. Kaffeemaschine (1) nach einem der vorhergehenden Ansprüche, **dadurch gekennzeichnet, dass** der Luftleitkanal (11) zumindest teilweise in den Hauptteil (16) der Kaffeemaschine (1) integriert ist.

5. Kaffeemaschine (1) nach Anspruch 1, **dadurch gekennzeichnet, dass** der Ventilator (12) einen Luftstrom zum Verbessern der Temperaturverteilung in der Tropfschalenaussparung (10) und zum Befördern von Feuchtigkeit aus der Tropfschalenaussparung (10) über das Lüftungssystem zur Außenseite der Kaffeemaschine bereitstellt.

## Revendications

1. Machine à café (1) présentant un corps (16), un logement (2), un réservoir d'eau (6), une pompe, un dispositif de brassage (7) permettant de brasser le café sur la base du café moulu distribué, un bac récepteur (9), une cavité pour bac récepteur (10) et un système de ventilation (8) qui est doté d'au moins un ventilateur (12) permettant de fournir un courant d'air au moins afin de transporter un arôme de mouture de café à l'extérieur **caractérisé en ce que** le système de ventilation (8) est en communication avec la cavité de bac récepteur (10) par un canal de guidage d'air (11) qui est sous la forme d'un tuyau en forme de L inversé présentant une entrée de canal de guidage d'air (13) et une sortie de canal de guidage d'air (14), qui relie directement la cavité de bac récepteur (10) au système de ventilation (8) dans le but d'éliminer l'humidité de la cavité de bac récepteur (10) et d'améliorer la répartition de la température à l'intérieur de la cavité de bac récepteur (10).

2. Machine à café (1) selon la revendication 1, **caractérisée en ce que** le canal de guidage d'air (11) est séparé d'une structure interne de la machine à café (1).

3. Machine à café (1) selon la revendication 1 ou 2, **caractérisée en ce que** le canal de guidage d'air (11) est créé comme un corps en une seule partie.

4. Machine à café (1) selon l'une quelconque des revendications précédentes, **caractérisée en ce que** le canal de guidage d'air (11) est au moins partiellement intégré dans le corps (16) de la machine à café (1).

5. Machine à café (1) selon la revendication 1, **caractérisée en ce que** le ventilateur (12) fournit un courant d'air permettant d'améliorer la répartition de la température à l'intérieur de la cavité de bac récepteur (10) et permettant de transporter l'humidité de la cavité de bac récepteur (10) via le système de ventilation vers l'extérieur de la machine à café.
